# EUROPEAN PATENT SPECIFICATION

(11) **EP 0 431 908 B1**
(45) Date of publication and mention of the grant of the patent: **28.02.1996**
(21) Application number: 90313180.3
(22) Date of filing: 05.12.1990
(51) Int. Cl.: G11B 23/087, G11B 15/61

(54) **Magnetic tape cassettes**
Magnetbandkassette
Cassette à bande magnétique

(30) Priority: 06.12.1989 JP 317028/89
(43) Date of publication of application: 12.06.1991
(73) Proprietor: SONY CORPORATION, Tokyo 141 (JP)
(72) Inventor: Tanaka, Masato, Shinagawa-ku, Tokyo 141 (JP); Yanaka, Kiyotaka, Shinagawa-ku, Tokyo 141 (JP)
(74) Representative: Thomas, Christopher Hugo

(56) References cited:
- EP-A- 0 142 807
- EP-A- 0 179 501
- FR-A- 2 233 675
- GB-A- 2 099 399
- GB-A- 2 167 040
- US-A- 3 923 272
- US-A- 4 341 365
- US-A- 4 654 740

## Description

This invention relates to magnetic tape cassettes.

One known magnetic tape cassette includes a tape-like record medium or magnetic tape wound around reel hubs and housed in a cassette casing, as disclosed in US-A-4654740. Each of the reel hubs comprises an outer hub member around which the magnetic tape is wound, and an inner hub member that is rotatable by a hub drive shaft inserted therein. The inner hub member is axially movably fitted in the outer hub member, and held in circumferential engagement with the outer hub member so that the inner and outer hub members are rotatable in unison with each other.

The magnetic tape is wound around the outer hub members of the reel hubs and housed in the cassette casing. The inner hub members of the reel hubs, in which the respective hub drive shafts are to be inserted, have opposite open ends inserted in apertures that are defined in respective upper and lower shells or parts of the cassette casing for the reception of the hub drive shafts therein. The opposite open ends of the inner hub members have axial end faces lying substantially flush with the outer surfaces of the upper and lower parts of the cassette casing. In use, the hub drive shafts are inserted into the inner hub members. When one of the hub drive shafts is rotated about its own axis, the corresponding inner hub member is rotated to cause the outer hub member fitted thereover in circumferential engagement to rotate, thereby winding and transporting the magnetic tape from the reel hub on the other drive shaft.

When the inner hub members are axially displaced, such axial displacement is not transmitted to the outer hub members around which the magnetic tape is wound. Therefore, the magnetic tape is prevented from being laterally displaced or skewed even when the inner hub members are axially moved with respect to the outer hub members. However, since the end faces of the inner hub members are exposed on the outer surfaces of the upper and lower shells of the cassette casing, the inner hub members may inadvertently be turned about their own axes by fingers, for example. If an inner hub member is turned about its own axis, then the circumferentially engaging outer hub member is also turned by the inner hub member, with the result that a magnetic tape wound around the outer hub members is undesirably transported, or is unduly slackened or tensioned until it may finally be stretched, torn, or otherwise damaged,

Another problem with the known magnetic tape cassette is that when it is loaded into a magnetic tape recording and reproducing apparatus, the hub drive shafts directly abut against the inner hub members, and engaging teeth on the hub drive shafts tend to be caught by the inner hub members. Consequently, the hub drive shafts may not be smoothly inserted into the inner hub members, making it difficult to load the magnetic tape cassette smoothly into the recording and reproducing apparatus.

According to the present invention there is provided a magnetic tape cassette comprising:
a cassette casing comprising a pair of confronting cassette parts joined to each other;
a pair of reel hubs rotatably disposed in the cassette casing and supported by the cassette parts;
a magnetic tape wound around the reel hubs and housed in the cassette casing;
a pair of apertures in each of the cassette parts to receive respective hub drive shafts, and
an axial aperture in each of the reel hubs to receive a respective one of the hub drive shafts;
wherein each of the reel hubs comprises an inner hub member with one of the axial apertures defined therein, and an outer hub member with the tape wound therearound, with the inner hub member axially slidably disposed in the outer hub member and held in circumferential engagement with the outer hub member for rotation in unison with each other;
characterised in that a pair of circular recesses is defined in inner surfaces of the cassette parts in coaxial surrounding relation to the apertures;
each of the inner hub members has each of its ends loosely fitted in a respective one of the recesses; and
the outside diameters of the ends of the inner hub members is greater than the diameters of the apertures in the cassette parts whereby the reel hubs are housed in their entirety between the cassette parts and are therefore concealed in the cassette casing for protection against direct access by fingers from the outer surfaces of the cassette parts.

Accordingly, the reel hubs are prevented from being inadvertently turned from outside the cassette casing. As a result, the magnetic tape will not be unduly loosened or tensioned. When the hub drive shafts are inserted into the reel hubs, the hub drive shafts are smoothly guided by the holes in the upper and lower shells without directly hitting the reel hubs. Therefore, the tape cassette can easily and smoothly be loaded into a recording and reproducing apparatus.

The invention will now be described by way of example with reference to the accompanying drawings, throughout which like parts are referred to by like references, and in which:
Figure 1 is a fragmentary cross-sectionally view of an embodiment of magnetic tape cassette according to the present invention;
Figure 2 is a perspective view of the tape cassette;
Figure 3 is a perspective view of the tape cassette and a head drum; and
Figure 4 is a plan view of a lower part of the cassette casing of the tape cassette.

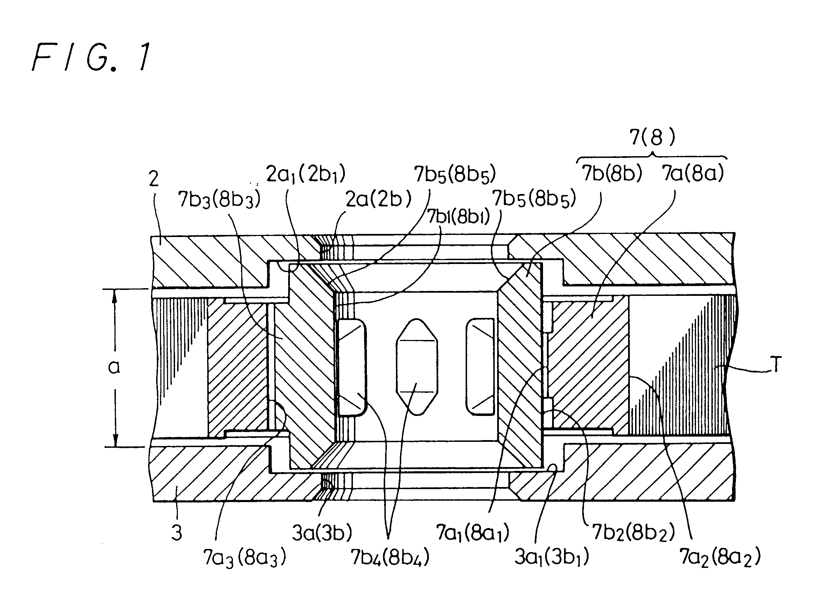

Figures 1 to 4 show a magnetic tape cassette in accordance with the present invention. While the tape cassette may be of any of various sizes, it is typically in the form of a miniature magnetic tape cassette.

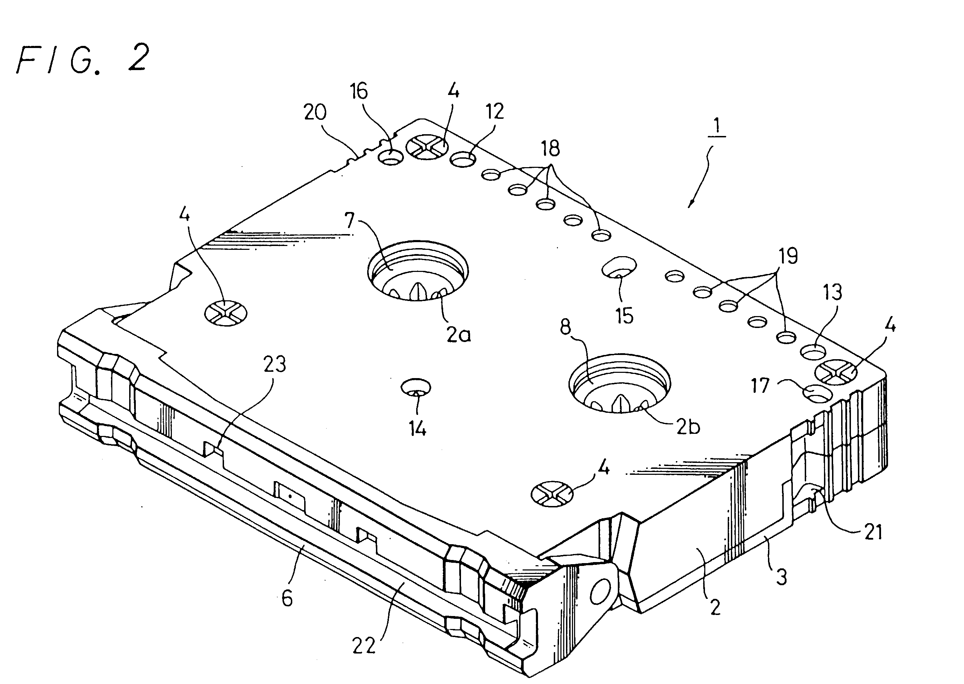

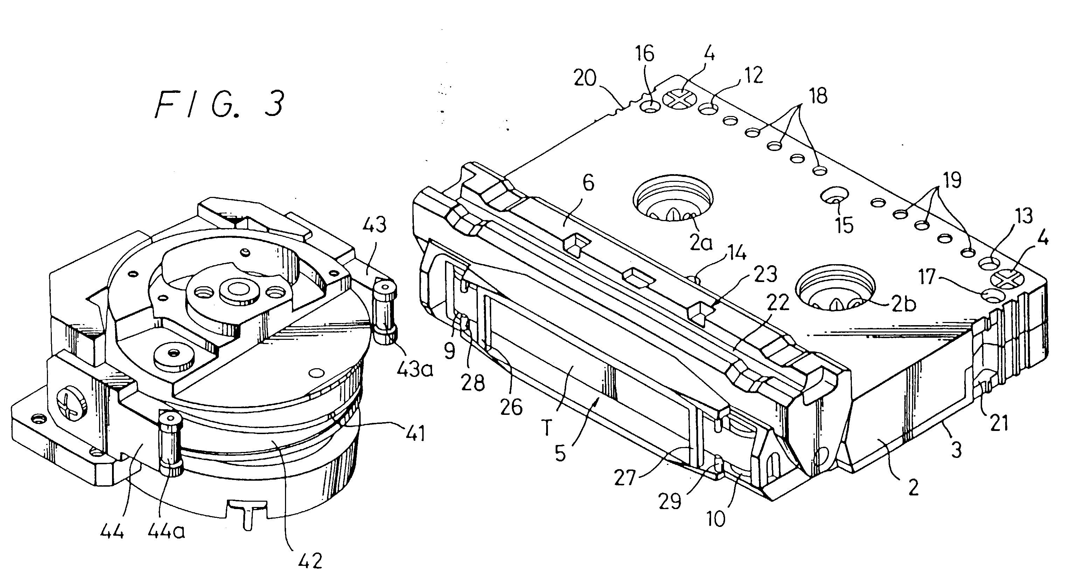

As shown in Figures 2 and 3, the tape cassette includes a cassette casing 1 which houses therein a magnetic tape T for recording and reproducing pulse code modulated (PCM) signals, for example. The cassette casing 1 comprises an upper shell or part 2 and a lower shell or part 3 which are combined together in confronting relation to each other and fastened to each other by screws 4. The upper and lower parts 2 and 3 have a front opening 5 defined in their front panels, the opening 5 being selectively openable and closable by a lid 6 which is pivotably supported on the cassette casing 1.

As shown in Figures 1 and 2, the upper part 2 has a pair of spaced apertures 2a and 2b defined therein for receiving respective hub drive shafts (not shown) in a magnetic tape recording and reproducing apparatus, and the lower part 3 has a pair of spaced apertures 3a and 3b defined therein for receiving the hub drive shafts, the apertures 2a and 2b being aligned with the apertures 3a and 3b, respectively. A pair of hubs 7 and 8 are rotatably disposed in the cassette casing 1 between the upper and lower parts 2 and 3 in alignment with the paired apertures 2a and 3a and the paired apertures 2b and 3b, respectively. As also shown in Figure 3, the cassette casing 1 houses therein the tape T which is wound around the reel hubs 7 and 8 and has a portion exposed in the opening 5. The exposed portion of the tape T is kept taut in the opening 5 by and between pinch or guide rollers 9 and 10 which are rotatably supported between the upper and lower parts 2 and 3 on opposite sides of the opening 5.

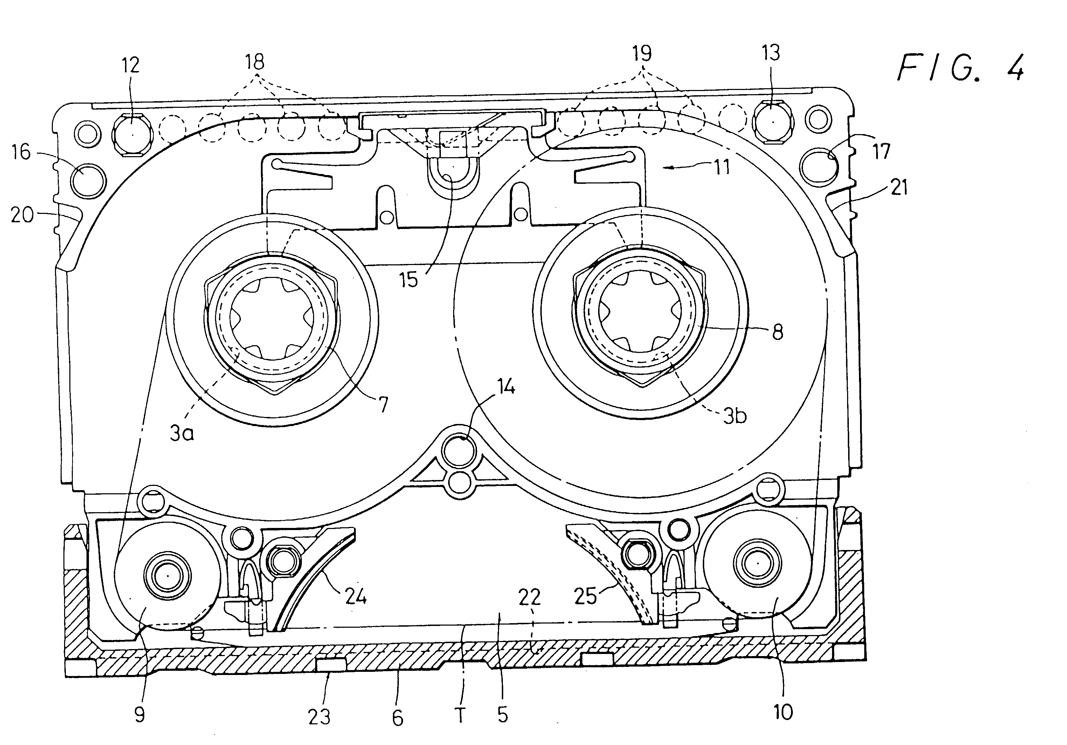

As illustrated in Figure 4, the cassette casing 1 also houses therein a brake mechanism 11 for braking the hubs 7 and 8 when the tape cassette is not in use. As shown in Figures 2, 3 and 4, each of the upper and lower parts 2 and 3 has a pair of erase prevention mechanisms 12 and 13 located respectively on the rear corners, a pair of positioning reference apertures 14 and 15 defined respectively in the front and rear edge portions in a longitudinally central region, a pair of positioning reference apertures 16 and 17 defined respectively in the rear corners or in the rear edge portion in longitudinally opposite side regions, a plurality of detection apertures 18 and 19 defined in the rear edge portion, and a pair of grips 20 and 21 located on the rear side portions.

The lid 6 for selectively opening and closing the opening 5 has a changer engaging portion 23 extending along a guide groove 22 which is defined in an outer surface thereof and extends longitudinally therealong.

In use, signals can be recorded on and reproduced from the tape T housed in the cassette casing 1 by a rotating head 41 (Figure 3) based on helical-scan recording and playback principles.

More specifically, as shown in Figure 3, the rotating head 41 is supported on a head drum 42 for rotation in a plane inclined with respect to the head drum 42 in the magnetic tape recording and reproducing apparatus (not shown). When the tape T is loaded in the apparatus, the lid 6 is turned upwardly or downwardly, and the head drum 42 is partly inserted into the opening 5. The tape T, which extends through the opening 5, is now slidably held against the inserted circumferential surface segment of the head drum 42. When the rotating head 41 rotates, tracks are produced on the tape T in oblique relation to the longitudinal direction of the tape T.

In order to hold the tape T reliably helically against the head drum 42, the cassette casing 1 has a pair of spaced tape guides 24 and 25 (Figure 4) disposed in the opening 5 and having respective arcuate guide surfaces extending in opposite directions. The arcuate guide surfaces of the tape guides 24 and 25 are complementary in shape to the circumferential surface of the head drum 42. The tape guides 24 and 25 are positioned inwardly of the guide rollers 9 and 10, respectively, in confronting relation to each other. The tape guides 24 and 25 are swingable and laterally movable with respect to each other. When the head drum 42 is partly inserted into the opening 5, the guide surfaces of the tape guides 24 and 25 are swung and laterally moved into snug abutment against the inserted circumferential surface segment of the head drum 42, thereby sandwiching and guiding the tape T between the tape guides 24 and 25 and the inserted circumferential surface segment of the head drum 42.

As shown in Figure 3, two wing guides 43 and 44 are mounted on diametrically opposite sides of the head drum 42, and two rollers 43a and 44a are mounted on front ends of the wing guides 43 and 44, respectively. When the head drum 42 is partly inserted into the opening 5, the wing guides 43 and 44 are positioned between the pinch roller 9 and the tape guide 24 and between the pinch roller 10 and the tape guide 25, respectively, on opposite sides of the opening 5. The rollers 43a and 44a on the front ends of the wing guides 42 and 44 are held in rolling contact with the tape T, pushing the tape T into pressing contact with the tape guides 24 and 25.

The cassette casing 1 has a pair of spaced support bars 26 and 27 extending across the opening 5 and positioned inwardly of the respective guide rollers 9 and 10, and a pair of sets of guide teeth 28 and 29 for preventing the tape T from being displaced out of the cassette casing 1, the guide teeth 28 and 29 being positioned between the support bar 26 and the guide roller 9 and between the support bar 27 and the guide roller 10, respectively. The wing guides 43 and 44 are inserted between the support bar 26 and the guide tooth 28 and between the support bar 27 and the guide tooth 29, respectively.

The reel hubs 7 and 8 and their associated parts will now be described in detail with reference to Figure 1. The reel hubs 7 and 8 are structurally identical to each other, and only the reel hub 7 and its associated parts are shown in Figure 1, with only reference characters of the other reel hub 8 and its associated parts being added in parentheses.

The reel hubs 7 and 8 comprise respective outer hub members 7a and 8a and respective inner hub members 7b and 8b. The outer hub members 7a and 8a are in the form of drums and have respective inner circumferential surfaces 7a1 and 8a1. The inner hub members 7b and 8b, which are of a hollow cylindrical shape, are axially slidably fitted in the outer hub members 7a and 8a, respectively, and have respective outer circumferential surfaces 7b2 and 8b2 which are held in circumferential engagement with the inner circumferential surfaces 7a1 and 8a1, respectively, so that the outer hub members 7a and 8a and the inner hub members 7b and 8b are rotatable in unison with each other. The outer hub members 7a and 8a have respective outer circumferential surfaces 7a2 and 8a2 around which the tape T is wound. The inner hub members 7b and 8b have respective inner circumferential surfaces 7b1 and 8b1 defining axial apertures in which the hub drive shafts will be inserted.

The inner circumferential surfaces 7a1 and 8a1 of the outer hub members 7a and 8a have a plurality of axial engaging recesses 7a3 and 8a3 spaced at intervals in the circumferential direction. The inner hubs 7b and 8b have an outside diameter larger than the inside diameter of the apertures 2a, 3a, 2b and 3b for receiving the hub drive shafts, and a height or axial length slightly larger than the inner width of the cassette casing 1, that is the distance a between the inner surfaces of the upper and lower parts 2 and 3. The outer circumferential surfaces 7b2 and 8b2 of the inner hubs 7b and 8b have a plurality of axial engaging teeth 7b3 and 8b3 which axially movably engage in the respective axial engaging recesses 7a3 and 8a3. Since the axial engaging teeth 7b3 and 8b3 are axially movable with respect to, but circumferentially engage in the axial engaging recesses 7a3 and 8a3 for circumferential movement in unison, the outer hub members 7a and 8a and the inner hub members 7b and 8b are axially slidable with respect to each other, but are held in circumferential engagement with each other for circumferential movement in unison with each other. The inner circumferential surfaces 7b1 and 8b1 of the inner hub members 7b and 8b have a plurality of circumferentially spaced engaging teeth or ridges 7b4 and 8b4 which will be engaged by similar engaging teeth or ridges on the hub drive shafts. The inner hub members 7b and 8b have tapered guide surfaces 7b5, 8b5 on axially opposite open ends thereof, which are contiguous to the inner circumferential surfaces 7b1 and 8b1, and are progressively inclined radially inwardly towards the inner circumferential surfaces 7b1 and 8b1.

The upper and lower parts 2 and 3 have circular recesses or stepped surfaces 2a1, 2b1 and 3a1, 3b1 defined in the inner surfaces thereof in coaxial surrounding relation to the apertures 2a, 2b and 3a, 3b respectively. The circular recesses 2a1, 2b1 and 3a1, 3b1 are of a diameter larger than the outside diameter of the axial open ends of the inner hub members 7b and 8b. The circular axial open ends of the inner hub members 7b and 8b are loosely fitted respectively in the circular recesses 2a1, 2b1 and 3a1, 3b1, so that the inner hub members 7b and 8b are rotatably supported between the upper and lower parts 2 and 3.

The reel hubs 7 and 8 are housed in their entirety between the upper and lower parts 2 and 3 and are therefore concealed in the cassette casing 1 for protection against direct access by fingers from the outer surfaces of the upper and lower parts 2 and 3. Therefore, the reel hubs 7 and 8 are prevented from being inadvertently turned by fingers from outside the cassette casing 1. Since the outside diameter of the inner hub members 7b and 8b, which define the apertures for receiving the hub drive shafts, is larger than the inside diameter of the apertures 2a, 2b and 3a, 3b in the upper and lower parts 2 and 3, and also since the inner hub members 7b and 8b have the tapered guide surfaces 7b5 and 8b5, the hub drive shafts can smoothly be guided and inserted through the apertures 2a, 2b and 3a, 3b into the apertures in the inner hub members 7b and 8b, without directly hitting the reel hubs 7 and 8. The reel hubs 7 and 8 and the hub drive shafts are thus protected against damage when the tape cassette is loaded into the recording and reproducing apparatus.

The inside diameter of the apertures in the reel hubs 7 and 8 for receiving the hub drive shafts can be selected as desired without direct bearing on the apertures 2a, 2b and 3a, 3b in the upper and lower parts 2 and 3. Therefore, the reel hubs 7 and 8 can be constructed with less design limitations and hence manufactured with ease.

While the present invention has been shown as being applied to a miniature magnetic tape cassette, it is also applicable to larger magnetic tape cassettes, such as compact tape cassettes, for example.

With embodiments of the present invention, as described above, the reel hubs with the magnetic tape wound therearound have open ends loosely disposed in the recesses or stepped surfaces that are defined in the inner surfaces of the upper and lower parts of the cassette casing in coaxial relation with the apertures in the upper and lower parts for receiving the hub drive shafts. The reel hubs are therefore housed in their entirety in the cassette casing and protected against direct access by fingers. Accordingly, the reel hubs are prevented from being inadvertently turned from outside the cassette casing, with the result that the magnetic tape will not be unduly loosened or tensioned. Since the reel hubs are received in the recesses in the upper and lower shells, the reel hubs serve to keep the interior of the cassette casing hermetically sealed for protection against entry of dust particles or other foreign matter. When the hub drive shafts are inserted into the reel hubs, the hub drive shafts are smoothly guided by the holes in the upper and lower shells without directly hitting the reel hubs. Therefore, the tape cassette can easily and smoothly be loaded into a recording and reproducing apparatus.

## Claims

1. A magnetic tape cassette comprising:
a cassette casing (1) comprising a pair of confronting cassette parts (2, 3) joined to each other;
a pair of reel hubs (7, 8) rotatably disposed in the cassette casing (1) and supported by the cassette parts (2, 3);
a magnetic tape (T) wound around the reel hubs (7, 8) and housed in the cassette casing (1);
a pair of apertures (2a, 2b, 3a, 3b) in each of the cassette parts (2,3) to receive respective hub drive shafts, and
an axial aperture in each of the reel hubs (7, 8) to receive a respective one of the hub drive shafts;
wherein each of the reel hubs (7, 8) comprises an inner hub member (7b, 8b) with one of the axial apertures defined therein, and an outer hub member (7a, 7b) with the tape (T) wound therearound, with the inner hub member (7b, 8b) axially slidably disposed in the outer hub member (7a. 8a) and held in circumferential engagement with the outer hub member (7a, 7b) for rotation in unison with each other;
characterised in that a pair of circular recesses (2a1, 2b1, 3a1, 3b1) is defined in inner surfaces of the cassette parts (2, 3) in coaxial surrounding relation to the apertures (2a, 2b, 3a, 3b);
each of the inner hub members (7b,8b) has each of its ends loosely fitted in a respective one of the recesses (2a1, 2b1, 3a1, 3b1); and the outside diameters of the ends of the inner hub members (7b,8b) is greater than the diameters of the apertures (2a,2b,3a,3b) in the cassette parts whereby the reel hubs (7,8) are housed in their entirety between the cassette parts (2,3) and are therefore concealed in the cassette casing (1) for protection against direct access by fingers from the outer surfaces of the cassette parts (2,3).

## Patentansprüche

1. Magnetbandkassette mit
einem Kassettengehäuse (1), das aus einem Paar von einander gegenüberliegenden Kassettenteilen (2, 3) besteht, die miteinander verbunden sind,
einem Paar von Spulenkernen (7, 8), die in dem Kassettengehäuse (1) drehbar angeordnet und an den Kassettenteilen (2, 3) gelagert sind,
einem um die Spulenkerne (7, 8) gewickelten Magnetband (T), das in dem Kassettengehäuse (1) aufgenommen ist,
einem Paar von Öffnungen (2a, 2b, 3a, 3b) in jedem der Kassettenteile (2, 3) für die Aufnahme entsprechender Kernantriebswellen und
einer axialen Öffnung in jedem der Spulenkerne (7, 8) für die Aufnahme jeweils einer der Kernantriebswellen,
wobei jeder der Spulenkerne (7, 8) ein inneres Kernteil (7b, 8b) aufweist, in dem jeweils eine der axialen Öffnungen ausgebildet ist, sowie ein äußeres Kernteil (7a, 8a), um welches das Magnetband gewickelt ist, wobei das innere Kernteil (7b, 8b) in dem äußeren Kernteil (7a, 8a) in axialer Richtung gleitbar angeordnet und in Umfangsrichtung mit dem äußeren Kernteil (7a, 8a) derart in Eingriff steht, daß sie gemeinsam rotieren können,
**dadurch gekennzeichnet,**
daß an den Innenflächen der Kassettenteile (2, 3) jeweils zwei kreisförmige Vertiefungen (2a1, 2b1, 3a1, 3b1) ausgebildet sind, die die genannten Öffnungen (2a, 2b, 3a, 3b) koaxial umgeben,
daß jedes der inneren Kernteile (7b, 8b) mit jedem seiner Enden in jeweils eine dieser Vertiefungen (2a1, 2b1, 3a1, 3b1) eingesetzt ist,
und daß die Außendurchmesser der Enden der inneren Kernteile (7b, 8b) größer sind als die Durchmesser der Öffnungen (2a, 2b, 3a, 3b) in den Kassettenteilen (2, 3), so daß die Spulenkerne (7, 8) vollständig zwischen den Kassettenteilen (2, 3) aufgenommen und somit in dem Kassettengehäuse (1) zum Schutz gegen einen direkten Fingerzugriff von den Außenflächen der Kassettenteile (2, 3) her verborgen sind.

## Revendications

1. Cassette de bande magnétique comprenant :
un boîtier (1) de cassette comprenant deux parties de cassette (2, 3) opposées face à face, réunies l'une à l'autre.;
deux moyeux (7, 8) de bobines disposés rotatifs dans le boîtier (1) de cassette et supportés par les parties (2, 3) de la cassette ;
une bande magnétique (T) enroulée autour des moyeux (7, 8) des bobines et logée dans le boîtier (1) de la cassette ;
deux ouvertures (2a, 2b, 3a, 3b) ménagées dans chacun des parties (2, 3) de la cassette pour recevoir des arbres d'entraînement de moyeux respectifs ; et
une ouverture axiale ménagée dans chacun des moyeux (7, 8) de bobines pour recevoir celui des arbres d'entraînement de moyeu qui lui correspond respectivement ;
dans laquelle chacun des moyeux (7, 8) de bobines comprend un élément intérieur de moyeu (7b, 8b), dans lequel est définie une des ouvertures axiales, et un élément extérieur de moyeu (7a, 7b), sur lequel la bande (T) est enroulée, l'élément intérieur de moyeu (7b, 8b) étant disposé mobile en coulissement axial dans l'élément extérieur de moyeu (7a, 8a) et maintenu en prise circonférentielle avec l'élément extérieur de moyeu (7a, 7b) pour tourner conjointement avec celui-ci ;
caractérisé en ce que deux évidements circulaires (2a1, 2b1, 3a1, 3b1) sont définis dans les surfaces intérieures des parties (2, 3) de la cassette, dans une position qui entoure coaxialement les ouvertures (2a, 2b, 3a, 3b) ;
chacun des éléments intérieurs de moyeux (7b, 8b) a chacune de ses extrémités logée avec jeu dans celui des évidements (2a1, 2b, 3a1, 3b1) qui lui correspond respectivement ; et
les diamètres extérieurs des extrémités des éléments intérieurs de moyeux (7b, 8b) sont plus grands que les diamètres des ouvertures (2a, 2b, 3a, 3b) des parties de la cassette, de sorte que les moyeux (7, 8) des bobines sont entièrement logés entre les parties (2, 3) de la cassette et sont donc cachés dans le boîtier de la cassette de façon à être protégés de l'accès direct des doigts en partant des surfaces extérieures des parties (2, 3) de la cassette.
